(19) Europäisches Patentamt
European Patent Office
Office européen des brevets

(11) EP 4 641 286 A1

(12) DEMANDE DE BREVET EUROPEEN

(43) Date de publication:
**29.10.2025 Bulletin 2025/44**

(21) Numéro de dépôt: **25171704.7**

(22) Date de dépôt: **22.04.2025**

(51) Classification Internationale des Brevets (IPC):
***G02B 27/00*** *(2006.01)* ***B08B 17/02*** *(2006.01)*

(52) Classification Coopérative des Brevets (CPC):
**G02B 27/0006; B08B 7/02; B08B 17/02**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **23.04.2024 FR 2404198**

(71) Demandeurs:
- **Commissariat à l'Energie Atomique et aux Energies Alternatives**
  **75015 Paris (FR)**
- **Université de Toulon**
  **83130 La Garde (FR)**

(72) Inventeurs:
- **BRISSET, Hugues**
  **38054 GRENOBLE CEDEX 09 (FR)**
- **CASSET, Fabrice**
  **38054 GRENOBLE CEDEX 09 (FR)**

(74) Mandataire: **Cabinet Camus Lebkiri**
**25 rue de Maubeuge**
**75009 Paris (FR)**

# (54) SYSTÈME VIBRATOIRE DE PROTECTION D'UN CAPTEUR CONTRE L'ENCRASSEMENT BIOLOGIQUE PAR DES MICROORGANISMES AQUATIQUES

(57) Un aspect de l'invention concerne un système (10) de lutte contre l'encrassement biologique par des microorganismes, adapté pour coopérer avec un dispositif de mesure adapté pour être immergé dans un liquide, le dispositif de mesure comprenant une surface d'encrassement apte à autoriser une mesure, le système (10) étant configuré pour recouvrir la surface d'encrassement et comprenant une membrane (11) et un actionneur (12) pour mettre en vibration la membrane (11).

(a)
(b)
10
11
12
13

(c)
10
12
11
13

Figure 1



Processed by Luminess, 75001 PARIS (FR)

## Description

### DOMAINE TECHNIQUE DE L'INVENTION

Le domaine technique de l'invention est celui des dispositifs de mesure en milieu liquide qui sont sujets à de l'encrassement biologique par des microorganismes (en anglais « biofouling »).

En particulier, l'invention concerne un système de lutte contre l'encrassement biologique par des microorganismes.

### ARRIERE-PLAN TECHNOLOGIQUE DE L'INVENTION

Les équipements utilisés en milieu liquide, dans lequel ils sont partiellement ou totalement immergés, sont sujets à de l'encrassement biologique (en anglais « biofouling ») par des microorganismes (par exemple des bactéries, des algues, des mollusques, etc.) du fait de leur dépôt et adhésion sur les surfaces desdits équipements, et ce après seulement quelques minutes en immersion.

Lorsque que l'équipement en question est un équipement de mesure comprenant un capteur, les mesures qu'il relève sont perturbées, voire faussées ou impossibles à effectuer, à cause de l'accumulation de ces microorganismes et de leur développement, notamment sur et autour de la portion du capteur servant à la mesure. C'est typiquement le cas pour un capteur optique où l'émission et la captation de l'onde lumineuse sont perturbées par l'encrassement sur la fenêtre du capteur à travers laquelle l'onde lumineuse se propage.

Il est connu d'appliquer sur la surface à protéger un revêtement comprenant des agents chimiques biocides dont la toxicité repousse et détruit les microorganismes qui s'y déposent. Ces revêtements chimiques sont cependant polluants et ne sont pas pérennes, puisque la quantité de biocides du revêtement n'est pas illimitée. Une fois cette quantité épuisée, le revêtement devient inefficace contre l'encrassement biologique.

Il est également connu d'utiliser des dispositifs mécaniques pour prévenir le dépôt des microorganismes, par exemple, un obturateur protégeant la surface de mesure qui ne s'ouvre qu'au moment de pratiquer une mesure. Il est également connu des mécanismes qui retire le dépôt de microorganismes de la surface en question, par exemple un mécanisme de type « essuie-glaces ». Toutefois, ces solutions sont elles aussi sensibles à l'encrassement biologique et imposent d'effectuer régulièrement des maintenances afin d'en ôter le dépôt de microorganismes.

Il est par ailleurs connu d'instrumenter les capteurs avec un dispositif visant à mettre en vibration la portion du capteur servant à faire la mesure afin de projeter les microorganismes qui s'y déposent. L'inconvénient est que cela nécessite d'adapter la fenêtre du capteur afin qu'elle ne casse pas sous l'effet de sa vibration. Ainsi, cette approche requiert de modifier le capteur lorsque celui-ci est déjà existant, dégradant de fait son étanchéité mais également la précision et la robustesse de la mesure qu'il effectue. De plus, la mise en vibration de façon répétée de la fenêtre peut engendrer une déformation de celle-ci, ainsi que fragiliser la structure sur laquelle est fixée la fenêtre.

Il existe donc un besoin d'un système anti-encrassement biologique qui puisse équiper n'importe quel capteur immergé.

### RESUME DE L'INVENTION

L'invention offre une solution aux problèmes évoqués précédemment, en proposant un système de lutte contre l'encrassement biologique par des microorganismes qui adapté pour coopérer avec un dispositif de mesure sans requérir de modifier ledit dispositif de mesure.

Un aspect de l'invention concerne ainsi un système de lutte contre l'encrassement biologique par des microorganismes, adapté pour coopérer avec un dispositif de mesure destiné à être immergé dans un liquide, le dispositif de mesure comprenant une surface d'encrassement, le système étant configuré pour recouvrir la surface d'encrassement, le système comprenant :

- une membrane ;
- un actionneur, positionné sur l'une des faces de la membrane et apte à mettre en vibration la membrane, l'actionneur formant un motif comprenant un contour interne et un contour externe, le contour interne et le contour externe étant concentriques de centre C, le contour interne ayant une distance minimale $d_i$ du centre C et le contour externe ayant une distance minimale $d_e$ du centre C, l'actionneur étant tel que $0,2 \leq \frac{d_i}{d_e} \leq 0,4$.

On entend par « dispositif de mesure » un équipement adapté pour effectuer une mesure d'une ou plusieurs propriétés, tel un capteur ou une sonde. A titre d'exemple, il s'agit d'un capteur optique (un capteur de fluorescence, une caméra, un laser, etc.), un capteur d'oxygène, de turbidité ou tout autre type de capteur dont le composant servant à la détection de la quantité à mesurer n'est pas en contact avec le milieu liquide, notamment par la présence d'un hublot entre le composant de détection et le liquide.

On entend par « surface d'encrassement » une portion du dispositif de mesure qui, lorsque ledit dispositif de mesure n'est pas assemblé avec le système selon l'invention, est en contact avec le liquide. La surface d'encrassement est donc une surface sur laquelle on souhaite éviter l'encrassement. A titre d'exemple, dans le cas où le dispositif de mesure est un capteur optique, la surface d'encrassement est la fenêtre du capteur à travers laquelle le capteur effectue sa mesure. Lorsque cette surface est encrassée, la mesure par le capteur optique est erronée.

On entend par « recouvrir » que la surface d'encrassement n'est pas en contact avec le milieu liquide lorsqu'elle est recouverte par le système selon l'invention.

On entend par « membrane » un dispositif mécanique apte à être mis en vibration via une excitation générée par l'actionneur. Cette membrane a, de préférence, une épaisseur mince devant ses autres dimensions, notamment sa longueur ou son diamètre. La membrane peut être circulaire, rectangulaire, ou tout autre forme adaptée au capteur.

On entend par « actionneur» un dispositif dont l'activation par un signal électrique permet de mettre en vibration la membrane. Il s'agit typiquement d'un actionneur thermique ou piézoélectrique.

On entend par « motif » une forme géométrique formée par l'actionneur, notamment formée sur la membrane, en particulier sur la face de la membrane où est positionnée l'actionneur.

Grâce à l'invention, il est possible d'empêcher le dépôt, l'adhésion et le développement des microorganismes aquatiques sur la membrane ainsi que sur la surface d'encrassement, lorsque le système coopère avec le dispositif de mesure. En particulier, la mise en vibration de la membrane permet de chasser les microorganismes vers la périphérie de la membrane en question.

Cette protection contre l'encrassement biologique est, en outre, astucieusement mise en œuvre avec une membrane dont les dimensions sont déterminées de sorte à réduire l'amortissement de la vibration, et donc à augmenter l'amplitude du déplacement de membrane, afin d'améliorer le détachement et la projection des microorganismes déposés dessus.

Des essais ont montré qu'un tel dimensionnement de l'actionneur permet d'augmenter l'amplitude de la déformation de la membrane par l'augmentation du coefficient de transduction entre l'actionneur et la membrane. De plus, un tel dimensionnement permet d'atteindre de grandes amplitudes de déformation de la membrane sans risquer de détériorer ou de provoquer une rupture de l'actionneur lors de son actionnement, ce qui serait typiquement le cas si le ratio entre les distances minimales $d_i$ et $d_e$ était inférieur à 0,2, voire inférieur à 0,3.

Ce système est, par ailleurs, compatible avec n'importe quelle technologie de dispositif de mesure immergé. Il n'est pas nécessaire d'adapter ou de modifier la structure du dispositif de mesure pour assembler le système selon l'invention avec le dispositif de mesure.

Outre les caractéristiques qui viennent d'être évoquées, le système selon l'invention peut présenter une ou plusieurs caractéristiques complémentaires parmi les suivantes, considérées individuellement ou selon toutes les combinaisons techniquement possibles.

Dans un mode de réalisation, le dispositif de mesure comprend un capteur de mesure optique configuré pour émettre un faisceau optique, dans lequel la membrane comprend une surface, dite surface de mesure, correspondant à une portion de la membrane que traverse le faisceau optique lorsque le système coopère avec le dispositif de mesure, un centre de la surface de mesure correspond au centre C du contour interne et du contour externe du motif formé par l'actionneur, et une surface intérieure délimitée par le contour interne est au moins égale à 70% de la surface de mesure.

Dans un mode de réalisation, la distance minimale $d_i$ du contour interne au centre C est comprise entre 1 mm et 20 cm.

Dans un mode de réalisation, la distance minimale $d_e$ du contour externe au centre C est comprise entre 1,5 mm et 25 cm.

Dans un mode de réalisation, l'actionneur est configuré pour mettre en vibration la membrane à une fréquence d'excitation comprise entre 10 Hz et 1 kHz.

La mise en vibration de la membrane à une telle fréquence permet d'exciter le mode fondamental de la membrane, et donc de maximiser l'amplitude de déplacement de cette membrane, augmentant de fait la projection des microorganismes qui s'y déposent. Des essais ont montré que cette gamme de fréquence est particulièrement adaptée pour chasser l'encrassement qui se forme sur la membrane.

Un autre intérêt d'exciter la membrane sur son mode de vibration fondamental est de produire un ventre unique de vibration, dont les dimensions sont les plus grandes comparativement aux autres modes de vibration. En conséquence, une telle excitation permet de chasser l'encrassement d'une même portion de taille conséquente de la membrane. Avantageusement, cette portion peut être utilisée aux fins de la mesure par le dispositif de mesure, notamment pour permettre au dispositif de mesure de pratiquer la mesure à travers cette portion, qui n'est donc pas ou peu sujette à l'encrassement.

Dans un mode de réalisation, l'actionneur comprend une pluralité de modules d'actionnement disjoints.

L'intérêt d'utiliser plusieurs modules d'actionnements, c'est-à-dire plusieurs actionneurs indépendants, permet une redondance du mécanisme l'actionnement et donc d'actionner la membrane quand bien même certains modules d'actionnement sont défaillants ou inopérants.

Dans un mode de réalisation, la membrane et le motif formé par l'actionneur sont de même forme.

On entend par « de même forme » que si la membrane est de forme circulaire alors le motif est de forme circulaire, par exemple annulaire, ou que si la membrane est de forme parallélépipédique, par exemple un rectangle, alors le motif est de forme parallélépipédique, par exemple un rectangle.

Dans un mode de réalisation, la membrane est de forme circulaire et le contour externe du motif formé par l'actionneur est situé à une distance inférieure à une distance seuil prédéfinie, d'un contour de la membrane.

L'actionneur est donc un actionneur « de pourtour » qui se situe sur le pourtour de la surface de la membrane. Par exemple, la distance seuil prédéfinie est inférieure ou égale à 10 % de la distance entre le contour de la membrane et le centre de la membrane.

Dans un mode de réalisation, l'actionneur est configuré pour mettre en vibration la membrane à une fréquence d'excitation, le système comprend en outre un circuit électronique configuré pour déterminer une fréquence de vibration de la membrane et pour modifier la fréquence d'excitation en fonction de la fréquence de vibration déterminée.

Il est ainsi possible de rétroactivement contrôler l'excitation produite par l'actionneur sur la membrane afin de corriger la fréquence de vibration de la membrane, typiquement pour faire vibrer la membrane sur la fréquence de son mode de vibration fondamental. Cette rétroaction permet d'assurer à la membrane de vibrer à sa fréquence de résonance pour laquelle l'amplitude de déformation sera la plus forte, malgré les contraintes changeantes de l'environnement qui impactent sa fréquence de résonance, telles que le mouvement du milieu liquide (par exemple houle, tempête) ou des variations de profondeur d'immersion (par exemple dues aux vagues ou à la marée).

Un autre aspect de l'invention concerne un ensemble comprenant un dispositif de mesure et un système de lutte contre l'encrassement biologique selon l'invention, dans lequel la surface d'encrassement et la membrane sont en vis-à-vis.

On entend par « en vis-à-vis » que la surface d'encrassement et la membrane sont assemblés de sorte à se faire face l'une l'autre, c'est-à-dire pour être en regard l'une de l'autre.

Dans un mode de réalisation, la membrane a une amplitude maximale de déplacement $u_{max}$ relativement à une position au repos de la membrane selon une direction normale à une surface de la membrane, et une distance L entre la surface d'encrassement et la membrane est telle que $L \geq 2u_{max}$.

On entend par « amplitude maximale de déplacement » l'amplitude maximale que peut avoir le déplacement de la membrane sous l'effet d'une vibration dans une gamme prédéfinie de fréquences d'excitation.

On entend par « relativement à une position au repos » que l'amplitude maximale de déplacement correspond à la distance maximale de ce déplacement, dans un sens ou dans l'autre de la direction normale à la surface de la membrane, depuis la position au repos de la membrane, i.e., la position sans excitation de la membrane.

La distance d est ainsi suffisamment grande pour garantir que le déplacement de la membrane sous l'effet de l'excitation par l'actionneur n'entrera pas en contact avec la surface d'encrassement. Cette distance d est également ainsi suffisamment grande pour éviter d'avoir une pression trop forte dans l'espace entre la membrane et la surface d'encrassement qui endommagerait la membrane, l'actionneur et/ou la surface d'encrassement.

Dans un mode de réalisation, la membrane a deux faces opposées, dites face avant et face arrière, la face avant est destinée à être en contact avec le liquide, l'ensemble comprend une cavité fermée délimitée au moins en partie par la face arrière de la membrane et par la surface d'encrassement, une variation de pression dans la cavité est uniquement provoquée par le déplacement de la membrane sous l'effet de sa vibration.

Dans un mode de réalisation, la surface d'encrassement est une surface dédiée à une mesure par le dispositif de mesure.

On entend par « dédiée à la mesure » que la surface d'encrassement n'altère pas significativement la mesure par le dispositif de mesure. C'est-à-dire que la surface d'encrassement est la portion du dispositif de mesure via ou au travers de laquelle est effectuée la mesure, tel un hublot pour un capteur optique. Autrement dit, il s'agit de l'interface de mesure du dispositif de mesure avec le liquide.

L'invention et ses différentes applications seront mieux comprises à la lecture de la description qui suit et à l'examen des Figures qui l'accompagnent.

## BREVE DESCRIPTION DES FIGURES

D'autres caractéristiques et avantages de l'invention apparaîtront à la lecture de la description, qui peut être lue en regard des Figures. Ces Figures sont présentées à titre indicatif et nullement limitatif de l'invention.

La Figure 1 comprend des représentations schématiques d'un système anti-encrassement biologique, selon différents modes de réalisation de l'invention.

La Figure 2 est une représentation schématique d'une membrane du système anti-encrassement biologique, selon un mode de réalisation de l'invention.

La Figure 3 est une représentation schématique d'une membrane d'un système anti-encrassement, selon plusieurs modes de réalisation de l'invention.

La Figure 4 est une représentation schématique d'un dispositif de mesure destiné à être protégé par le système anti-encrassement, selon un mode de réalisation de l'invention.

La Figure 5 est une représentation schématique d'une variante d'un actionneur du système selon l'invention.

La Figure 6 est une représentation schématique d'un ensemble comprenant le système anti-encrassement et le dispositif de mesure, selon un mode de réalisation de l'invention.

La Figure 7 est une représentation schématique d'un déplacement de la membrane, selon un mode de réalisation.

La Figure 8 comprend deux représentations schématiques de variantes de réalisation de l'ensemble de la Figure 7.

**DESCRIPTION DETAILLEE**

Sauf précision contraire, un même élément apparaissant sur des figures différentes présente une référence unique.

La présente invention porte sur un système visant à protéger la surface d'encrassement d'un capteur, typiquement au travers de laquelle le capteur effectue ses mesures, contre l'encrassement biologique par des microorganismes aquatiques. Le système proposé repose sur l'utilisation d'une membrane dont la mise en vibration chasse les microorganismes qui s'y déposent. Le système est également adapté pour être assemblé avec un capteur afin d'en isoler la surface d'encrassement du milieu liquide, ce qui empêche le dépôt de microorganismes sur la surface d'encrassement. La membrane est également adaptée pour permettre la mesure par le capteur à travers ladite membrane.

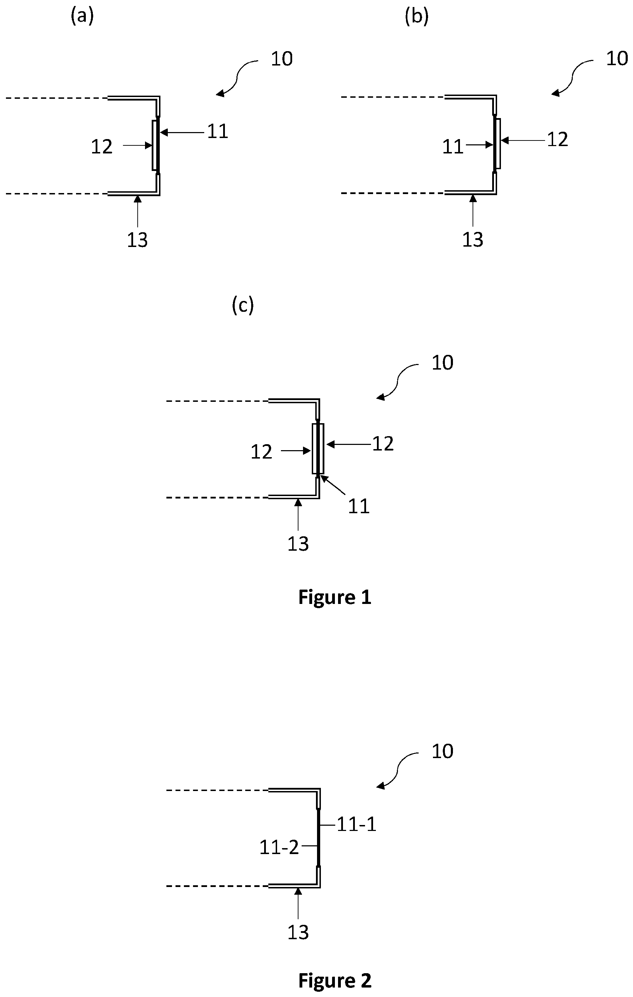

Un aspect de l'invention concerne donc un système 10 de lutte contre l'encrassement biologique par des microorganismes, également appelé système 10 anti-encrassement, ainsi qu'illustré sur les schémas de la Figure 1.

Le système 10 comprend une membrane 11 qu'il est possible de mettre en vibration par une excitation mécanique générée par un actionneur 12.

La membrane 11 peut être reliée à un support 13, typiquement par encastrement au niveau du périmètre de la membrane 11. C'est-à-dire que la membrane 11 est maintenue par l'encastrement de son pourtour sur le support 13.

Ainsi qu'illustré sur la Figure 2, la membrane 11 peut comprendre deux faces opposées : une face avant 11-1 et une face arrière 11-2. La face avant 11-1 est tournée vers le milieu liquide avec lequel elle est destinée à être en contact. La face arrière 11-2 est tournée vers l'intérieur du système 10. Lorsque ce système 10 est assemblé avec un dispositif de mesure, par exemple un capteur, cette face arrière 11-2 est tournée vers le dispositif de mesure.

On entend par « tournée vers » que la face concernée fait face à l'objet vers lequel elle est tournée, c'est-à-dire que la face est orientée vers ledit objet.

La membrane 11 a une épaisseur qui est plus petite que ses autres dimensions, notamment devant sa longueur. Typiquement, la membrane est de forme circulaire, c'est-à-dire que la membrane est un disque, avec une épaisseur comprise entre 50 μm et 5 mm, typiquement entre 50 μm et 500 μm, et un diamètre compris entre 1 cm et 25 cm. Alternativement, la membrane est de forme parallélépipédique, typiquement un rectangle, avec une épaisseur comprise entre 5 μm et 5 mm, par exemple entre 50 μm et 500 μm, et sa longueur et/ou sa largeur est au moins supérieure à 1 cm, par exemple sa longueur et/ou sa largeur sont entre 1 cm et 25 cm.

La membrane 11 est composée d'un matériau étanche et apte à résister à des pressions en milieu liquide jusqu'à 2 bar.

Dans un mode de réalisation, la membrane 11 comprend une surface, dite surface de mesure 11-3 à travers laquelle le dispositif de mesure peut effectuer une mesure. Par exemple, dans le cas où le dispositif de mesure comprend un capteur optique, le faisceau optique émis par le capteur optique traverse la surface de mesure lorsque le système coopère avec le dispositif de mesure. La surface de mesure correspond donc à la portion de la membrane que traverse le faisceau optique lorsque le système coopère avec le dispositif de mesure.

La surface de mesure 11-3 de la membrane 11 n'altère donc pas significativement la mesure par le dispositif de mesure. C'est-à-dire que le matériau de la surface de mesure 11-3 est tel que la surface de mesure 11-3 est transparente pour la mesure par le dispositif de mesure. On entend par « transparente » que la présence de la membrane a une influence négligeable sur la mesure effectuée par le dispositif de mesure. Typiquement, l'erreur de mesure induite par la présence de la membrane est inférieure ou égale à 5 % par rapport à une mesure effectuée en l'absence du système 10. Par exemple, dans le cas d'un capteur optique, la membrane laisse passer au moins 70% du faisceau optique, voire au moins 90 %, à la longueur d'onde d'émission et/ou réception dudit capteur.

La surface de mesure 11-3 peut correspondre à toute ou une partie de la surface de la membrane 11. Par exemple, la surface de mesure 11-3 correspond à au moins 50 %, au moins 60%, au moins 70 %, voire au moins 80 %, voire encore au moins 90 % de la surface de la membrane 11.

Dans l'exemple proposé ici, la membrane 11 est en polycarbonate et fait 250 μm d'épaisseur et 2 cm de diamètre. Alternativement, la membrane 11 peut être en polynaphtalate d'éthylène ou en polytéréphtalate d'éthylène, ou tout autre polymère transparent.

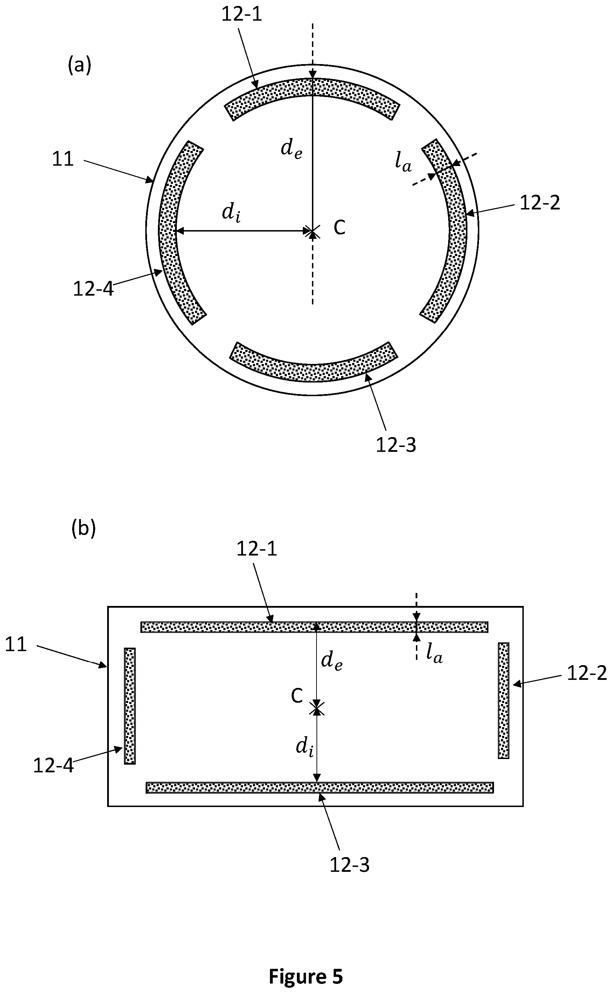

Le système 10 comprend également l'actionneur 12 servant à mettre en vibration la membrane 11. L'actionneur 12 est positionné sur l'une des faces de la membrane 11. Il est entendu que l'actionneur 12 peut être un actionneur unique, ou un ensemble d'actionneurs disjoints (comme sur l'exemple de la Figure 5).

Dans l'exemple de la Figure 1 (a), l'actionneur 12 est sur la face arrière 11-2. Dans l'exemple de la Figure 1 (b), l'actionneur 12 est sur la face avant 11-1.

Dans l'exemple de la Figure 1 (c), le système 10 comprend un actionneur 12 sur la face arrière 11-2 et un actionneur sur la face avant 11-1. Lorsque l'actionneur est sur la face avant, il est préférable de le rendre passif, c'est-à-dire de l'isoler du milieu liquide, par exemple en ajoutant une couche isolante sur l'actionneur ou via toute autre technologie connue, notamment pour isoler ses électrodes du liquide.

Dans une variante de réalisation, l'actionneur 12 peut avoir une même forme que celle de la membrane. C'est à dire que si la membrane 11 est de forme circulaire, alors l'actionneur 12 peut être aussi de forme circulaire ou annulaire. Alternativement, lorsque la membrane 11 est de forme parallélépipédique, alors l'actionneur 12 peut être également de forme parallélépipédique, par exemple chacun peut être de forme rectangulaire.

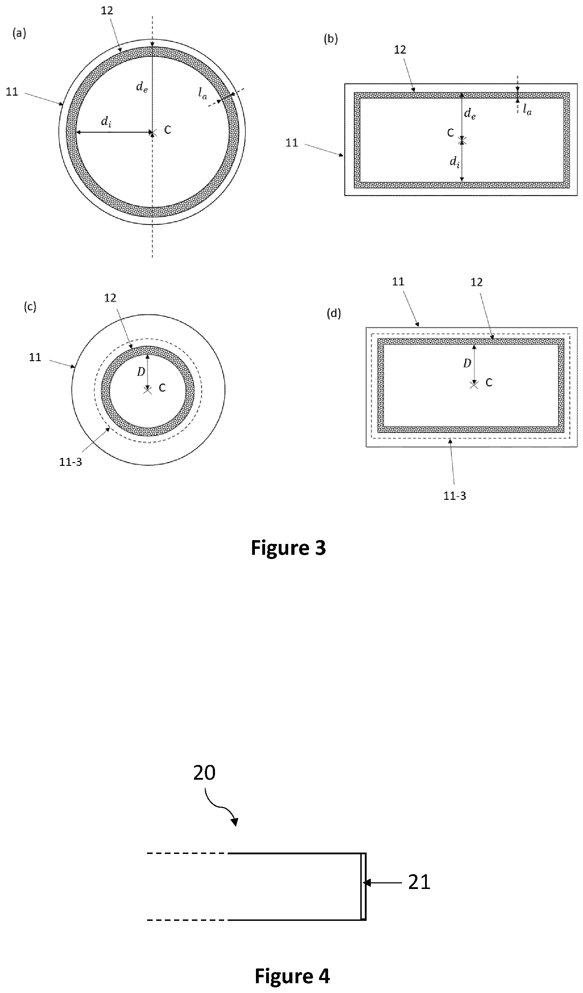

Ainsi que représenté sur la Figure 3, l'actionneur 12 forme un motif, c'est-à-dire qu'il forme une forme géométrique sur la membrane 11, en particulier sur la face sur laquelle il est positionné. Cette forme géométrique formée par l'actionneur 12 est délimitée par un contour interne et un contour externe. Le motif comprend donc le contour interne et le contour externe. Le motif est, par exemple, une forme géométrique continue et/ou régulière.

Le motif est, par exemple, un anneau, tel qu'illustré sur la figure 3 a), ou un parallélépipède, tel un rectangle, ainsi qu'illustré sur la figure 3 b).

Le contour interne et le contour externe sont concentriques de centre C.

Dans une variante de réalisation, le centre C est confondu avec le centre de la surface de mesure 11-3. C'est-à-dire que le centre de la surface de mesure correspond au centre C du contour interne et du contour externe du motif formé par l'actionneur.

Le contour interne de l'actionneur 12 a une distance minimale $d_i$ du centre C. Cette distance correspond donc au rayon du périmètre intérieur de l'actionneur lorsque celui-ci est annulaire, ou à la plus petite distance depuis le centre C jusqu'au contour interne de l'actionneur lorsque celui-ci est parallélépipédique.

Dans une variante de réalisation, la surface de mesure 11-3 est intégralement contenue dans la surface délimitée par le contour interne. Cela permet, avantageusement, de ne pas perturber la mesure effectuée par le dispositif de mesure par la présence de l'actionneur 12.

Le contour externe de l'actionneur 12 a une distance minimale $d_e$ du centre C. Cette distance correspond donc à un rayon, typiquement le plus petit rayon, du périmètre extérieur de l'actionneur lorsque celui-ci est annulaire (par exemple circulaire ou elliptique), ou à la plus petite distance depuis le centre C jusqu'au contour externe de l'actionneur lorsque celui-ci est parallélépipédique.

L'actionneur 12 est tel que $0{,}2 \leq \frac{d_i}{d_e} < 0{,}4$, par exemple tel que $0{,}25 \leq \frac{d_i}{d_e} \leq 0{,}35$, typiquement de l'ordre de $\frac{d_i}{d_e} = 0{,}3$.

L'écart entre la distance minimale $d_e$ du contour externe et la distance minimale $d_i$ du contour interne est noté $l_a$ et est tel que $l_a = d_e - d_i$. La différence $l_a$ correspond donc à la distance entre les périmètres intérieur et extérieur du motif formé par l'actionneur 12.

Autrement dit, l'actionneur 12 est tel que $0{,}2 \leq \frac{d_i}{d_i + l_a} < 0{,}4$, par exemple tel que $0{,}25 \leq \frac{d_i}{d_i + l_a} \leq 0{,}35$, typiquement de l'ordre de, $\frac{d_i}{d_i + l_a} = 0{,}3$.

Dans un mode de réalisation, la distance minimale $d_i$ du contour interne peut être comprise entre 1 mm et 20 cm, par exemple entre 1 mm et 2 cm, voire entre 4 mm et 1 cm. La distance minimale $d_e$ du contour externe peut être comprise entre 1,5 mm et 25 cm, par exemple entre 1,5 mm et 4,5 cm, voire entre 6,5 mm et 2 cm.

Dans un mode de réalisation, l'écart $l_a$ peut être compris entre 0,5 mm et 5 cm, voire entre 2,5 mm et 2 cm.

Dans un mode de réalisation, une distance maximale entre un bord de l'actionneur, par exemple le bord correspondant au contour externe, et un bord de la membrane peut être inférieure à 5 mm voire à 0,1 mm.

Dans une variante de réalisation, le bord correspondant au contour externe se trouve au-delà de la portion de la membrane qui est encastrée sur le système 10, notamment encastrée sur le support 13.

Alternativement, dans une variante de réalisation, le bord correspondant au contour externe est sur la membrane. C'est-à-dire que l'actionneur ne s'étend pas au-delà de la membrane mais est au contraire plus petit que celle-ci. Autrement dit, l'actionneur est intégralement sur la membrane. A titre d'exemple, lorsque la membrane est un disque dont le centre est confondu avec le centre C, alors la distance minimale $d_e$ du contour externe est plus petite que la distance du bord de la membrane au centre C.

L'actionneur 12 est un actionneur thermique, ou piézoélectrique. Par exemple, l'actionneur peut être en céramique piézoélectrique en titano-zirconates de plomb, également appelés PZT.

Dans un mode de réalisation, le matériau de l'actionneur 12 peut être en Polyfluorure de vinylidène.

Le système 10 est adapté pour coopérer avec le dispositif de mesure, typiquement un capteur ou une sonde. C'est-à-dire que le système 10 peut être assemblé avec un dispositif de mesure. En particulier, le support 13 du système 10 est adapté pour s'assembler avec le dispositif de mesure 20.

N'importe quel moyen de fixation peut être utilisé pour assembler le système 10 avec le dispositif de mesure 20. Par exemple, il peut s'agir d'une fixation par emboîtement, vis-écrou, clouage, collage, soudage, etc. Il peut être nécessaire d'ajouter des systèmes de joints en téflon, silicone ou tout autre matériau étanche connu de l'homme de l'art.

Une représentation schématique du dispositif de mesure 20 est proposée sur la Figure 4. Le dispositif de mesure 20 comprend une surface d'encrassement 21, qui est en contact avec le liquide lorsque le dispositif de mesure 20 n'est pas assemblé avec le système 10, c'est-à-dire lorsque le dispositif de mesure 20 et le système 10 ne coopèrent pas.

La surface d'encrassement 21 peut servir à pratiquer la mesure, i.e., la surface d'encrassement peut être une surface dédiée à la mesure par le dispositif de mesure 20. Par exemple, lorsque le dispositif de mesure 20 est un capteur optique, la surface d'encrassement 21 est un hublot transparent afin que le capteur puisse émettre et capter des ondes lumineuses à travers cette surface d'encrassement 21. En d'autres termes, la surface d'encrassement 21 sert d'interface avec le milieu environnant pour le dispositif de mesure 20.

La surface d'encrassement 21 peut également être la surface de détection du dispositif de mesure 20, c'est-à-dire qu'elle est sensible à la grandeur physique mesurée. Par exemple, dans le cas où le dispositif de mesure est un capteur optique 20 tel une caméra, la surface d'encrassement 21 peut comprend une ou plusieurs cellules photosensibles afin de capter la lumière provenant du milieu environnant.

Le dispositif de mesure 20 est adapté pour être immergé dans un liquide. A ce titre, il est étanche

Etant donné que le système 10 sert à isoler la surface d'encrassement 21 du milieu environnant, ici le liquide, le système 10 est adapté pour recouvrir ladite surface d'encrassement 21. En d'autres termes, le système 10 est prévu pour s'assembler avec le dispositif de mesure 20 de sorte à recouvrir la surface d'encrassement 21. Le système 10 est donc adapté pour que le recouvrement de la surface d'encrassement 21 soit étanche.

Des moyens de fixation de type écrou et vis de serrage peuvent être utilisés pour fixer le système 10 avec le dispositif de mesure 20, permettant ainsi de fermer et de rendre étanche cet assemblage. Ces moyens de fixation peuvent également servir à maintenir un joint d'étanchéité disposé entre les le système 10 et le dispositif de mesure 20.

Dans un mode de réalisation, le contour interne du motif formé par l'actionneur 12 délimite une surface interne, laquelle est donc circonscrite par le contour interne. Cette surface interne correspond à un évidement dudit actionneur 12. En d'autres termes, l'actionneur 12 est évidé en sa partie interne, laquelle correspond à la surface délimitée par le contour interne du motif formé par l'actionneur 12.

Dans ce mode de réalisation, la surface intérieure délimitée par le contour interne du motif formé par l'actionneur 12 est au moins égale à 70 %, par exemple au moins égale à 80 %, voire encore au moins égale à 90 %, de la surface de mesure 11-3. C'est-à-dire que l'aire de cette surface circonscrite par le contour interne est au moins égale à 70 %, par exemple au moins égale à 80 %, voire encore au moins égale à 90 %, de l'aire de la surface de mesure 11-3.

Autrement dit, la distance minimale $d_i$ du contour interne est supérieure ou égale à une distance prédéfinie *D*. La distance prédéfinie *D,* ainsi qu'illustrée sur les figures 3 c) et d), est telle que, lorsque la distance minimale $d_i$ est égale à distance prédéfinie D, la surface délimitée par le contour interne correspond à au moins 70 %, par exemple au moins 80% voire au moins 90 % de la surface de mesure 11-3.

En d'autres termes, lorsque la distance minimale $d_i$ est égale à distance prédéfinie D, l'évidement de l'actionneur 12 autorise le dispositif de mesure à effectuer une mesure au moins au travers de 70 %, par exemple 80 % voire 90 %, de la surface de mesure 11-3.

Autrement dit, lorsque le dispositif de mesure comprend un capteur optique, lequel est configuré pour émettre un faisceau optique, l'actionneur 12 est dimensionné de sorte à laisser passer au moins 70 %, par exemple 80 % voire 90 %, du faisceau optique émis par le capteur optique traversant la surface de mesure, notamment à une ou plusieurs longueurs d'onde considérées pour la mesure. Dans ce cas de figure, la surface de mesure est transparente au faisceau optique et est traversée par ledit faisceau optique quand le système coopère avec le dispositif de mesure.

Dans une variante de réalisation, l'actionneur 12 peut produire une vibration de la membrane 11 à une fréquence d'excitation comprise entre 10 Hz et 1 kHz. L'intérêt est ainsi de n'exciter que le mode de déformation fondamental de la membrane.

Dans l'exemple proposé, la membrane en polycarbonate de 250 $\mu$m d'épaisseur et de 2 cm de diamètre a son mode de déformation fondamental qui a une fréquence de résonnance égale à 595 Hz à une profondeur de 50 cm sous le niveau de liquide, en l'occurrence de l'eau.

Ainsi, la mise en vibration de la membrane chasse les microorganismes qui se déposent sur une large portion de la membrane, à tout le moins dans une portion de la membrane dont l'amplitude de déplacement est au moins supérieure à 20 % de l'amplitude maximale de déplacement de la membrane par rapport à sa position au repos.

Dans une variante de réalisation, ainsi qu'illustré sur la Figure 5, l'actionneur 12 peut être un ensemble d'actionneurs 12-1 à 12-4. Ces actionneurs 12-1 à 12-4 sont disjoints, i.e., ils ne sont pas en contact les uns avec les autres. L'ensemble d'actionneurs comprend au moins deux actionneurs.

Les actionneurs 12-1 à 12-4 sont disposés de sorte que leur disposition forme un motif sur la membrane, tel un anneau comme illustré sur la figure 5 a) ou un parallélépipède, tel un rectangle illustré sur la figure 5 b. En d'autres termes la disposition des actionneurs 12-1 à 12-4 sur la membrane 11 forme un motif fractionné sur ladite membrane 11.

Autrement dit, les actionneurs sont positionnés sur ce même motif, lequel respecte les contraintes imposées à l'actionneur 12 mentionné plus haut. En particulier, ce motif formé par les modules d'actionnement a un contour interne et un contour externe, tel que le contour interne a une distance minimale $d_i$ du centre C et tel que le contour externe a une distance minimale $d_e$ du centre C.

Les actionneurs 12-1 à 12-4 sont tels que $0,2 \leq \frac{d_i}{d_e} < 0,4$, par exemple tels que 0,25 $0,25 \leq \frac{d_i}{d_e} \leq 0,35$, typiquement de l'ordre de, $\frac{d_i}{d_e} = 0.3$.

Autrement dit, le motif formé par les modules d'actionnement a un écart $l_a$ entre la distance minimale $d_e$ du contour externe et la distance minimale $d_i$ du contour externe tel que $0,2 \leq \frac{d_i}{d_i + l_a} < 0,4$, par exemple tel que $0,25 \leq \frac{d_i}{d_i + l_a} \leq 0,35$, typiquement de l'ordre de, $\frac{d_i}{d_i + l_a} = 0.3$.

Dans cette variante, les plages de valeurs des distances minimales $d_i$ et $d_e$ et de la largeur $l_a$ sont les mêmes que celles indiquées plus haut.

Dans l'exemple de la figure 5 a), chacun des actionneurs 12-1 à 12-4 a une géométrie en arc de cercle, tandis que dans l'exemple de la figure 5 b) chacun des actionneurs 12-1 à 12-4 a une géométrie rectiligne.

Dans une variante de réalisation, la surface intérieure délimitée par le contour interne est au moins égale à 70%, par exemple au moins égale à 80%, voire au moins égale à 90 %, de la surface de mesure 11-3. Autrement dit la distance minimale $d_i$ du contour interne du motif est supérieure ou égale à la distance prédéfinie D, définie plus haut.

Dans une variante, le centre C du motif est confondu avec le centre de la surface de mesure 11-3.

Dans une variante de réalisation, le système 10 peut comprendre également un circuit électronique configuré pour déterminer la fréquence de vibration de la membrane 11 par une méthode connue en soi, par exemple via une mesure de l'impédance de l'actionneur 12.

Le circuit électronique permet alors, via une boucle de rétroaction, de modifier l'excitation générée par l'actionneur 12, en particulier de modifier la fréquence d'excitation. Le circuit électronique sert ainsi à modifier la fréquence à laquelle la membrane 11 vibre afin de maximiser son amplitude de déplacement, notamment en corrigeant ladite fréquence de vibration pour qu'elle corresponde à la fréquence du mode fondamental de déformation de la membrane 11.

Le circuit électronique sert donc à asservir la fréquence du signal d'actionnement délivré à l'actionneur 12 et servant à actionner la membrane 11, i.e., la fréquence d'excitation, en fonction de la fréquence de vibration déterminée.

Ce circuit électronique peut comprendre un processeur, un microcontrôleur, une puce électronique programmable comme une puce FPGA (pour « Field-Programmable Gate Array » en anglais), ou tout autre module électronique apte à déterminer la fréquence de vibration et à modifier la fréquence d'excitation en fonction de ladite fréquence de vibration.

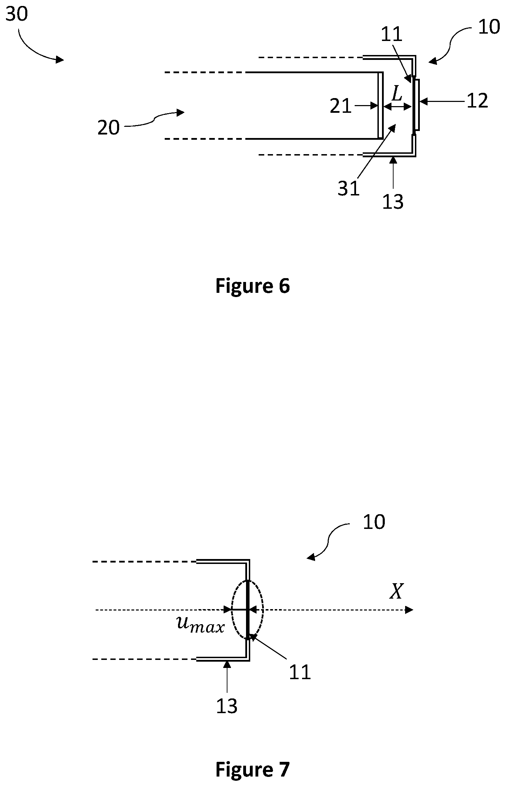

Un autre aspect de l'invention, ainsi qu'illustré sur la Figure 6, concerne un ensemble 30 comprenant le système 10 et le dispositif de mesure 20, décrits ci-dessus.

L'actionneur 12 est ici positionné sur la face avant 11-1 pour des raisons de clarté du schéma de la Figure 6. L'actionneur 12 peut, en effet, être indifféremment positionné sur l'une et/ou l'autre des faces de la membrane 11.

L'ensemble 30 est tel que la surface d'encrassement 21 et la membrane 11 sont en vis-à-vis. Autrement dit, le dispositif de mesure 20 et le système 10 sont assemblés pour que la surface d'encrassement 21 et la membrane 11 soient positionnées face à face l'une de l'autre.

Dans une variante de réalisation, ainsi qu'illustré sur la Figure 7, la membrane peut avoir une amplitude de déplacement maximale $u_{max}$, par rapport à sa position au repos, selon une direction normale $X$ à une de ses faces.

La direction normale $X$ correspond à la direction de déformation de la membrane 11 sous l'effet de l'excitation par l'actionneur 12.

On entend par « position au repos » la position de la membrane lorsqu'elle n'est pas mise en vibration par l'excitation produite par l'actionneur. L'amplitude de déplacement maximale $u_{max}$ correspond ainsi à la différence maximale de position atteinte par la membrane lorsqu'elle est mise en vibration par l'actionneur, par rapport à sa position au repos.

Le déplacement de la membrane 11 est illustré par les arcs de cercle en pointillés de part et d'autre de la membrane 11.

En référence à nouveau à la Figure 6, le système 10 et le dispositif de mesure 20 sont assemblés dans l'ensemble 30 tels qu'une distance L non nulle existe entre la surface d'encrassement 21 et la membrane 11. La distance L peut, alternativement, correspondre à la distance entre la surface d'encrassement 21 et la face arrière 11-2.

Dans cette variante de réalisation, l'ensemble 30, c'est-à-dire l'assemblage du système 10 et du dispositif de mesure 20, typiquement via le support 13, peut être tel que la distance $L$ satisfait la relation $L \geq 2u_{max}$.

Par exemple, dans le cas où la membrane a une amplitude de vibration maximale de 50 μm, alors la distance L est supérieure ou égale à 100 μm.

Dans une variante de réalisation, illustrée sur la Figure 6, l'ensemble 30 peut comprendre une cavité 31 fermée entre la membrane 11 et la surface d'encrassement 21.

La cavité 31 est donc délimitée, au moins en partie, par la face arrière 11-2 de la membrane 11 et par la surface d'encrassement 21.

Dans cette variante de réalisation, la pression du fluide compris dans la cavité 31 peut être seulement modifiée par le déplacement de la membrane 11 lorsque celle-ci est mise en vibration par l'actionneur 12. Autrement dit, une variation de pression dans la cavité 31 fermée est uniquement provoquée par le déplacement de la membrane 11 sous l'effet de sa vibration.

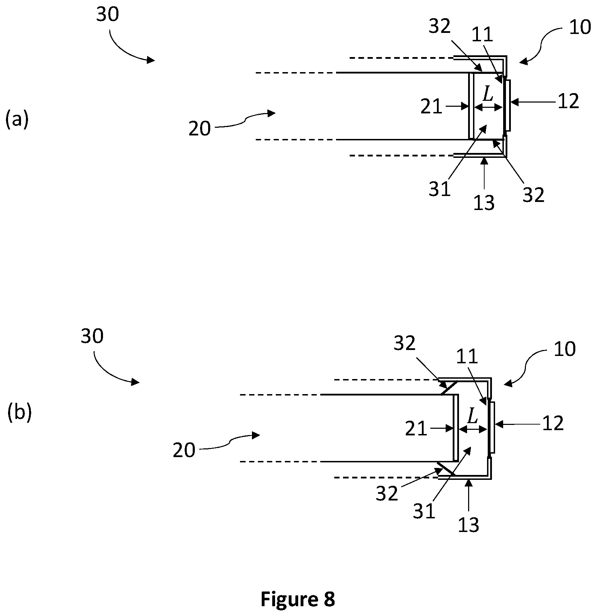

Dans une alternative de réalisation, illustrée sur les Figure 8 (a) et 8 (b), l'ensemble 30 peut comprendre une embase 32, par exemple comprise dans le système 10, typiquement, l'embase 32 est solidaire du le support 13.

L'embase 32 sert à circonscrire la cavité 31 entre la membrane 11 et la surface d'encrassement 21. La cavité 31 fermée est donc délimitée par la membrane 11, la surface d'encrassement 21 et l'embase 32. L'embase 32 est donc adaptée pour coopérer avec le dispositif de mesure 20 afin de fermer la cavité 31.

L'embase 32 peut être fixée sur le support 13 de sorte que la cavité 31 s'étende, a minima, sur toute la longueur de la face arrière 11-2 de la membrane 11.

L'actionneur 12 est ici positionné sur la face avant 11-1 pour des raisons de clarté des schémas de la Figure 8. Il est noté que l'actionneur 12 peut être indifféremment positionné sur l'une et/ou l'autre des faces de la membrane 11.

Le positionnement de l'embase 32 sur le support 13 et relativement au dispositif de mesure 20 dépend de l'application en question et des caractéristiques géométriques dudit dispositif de mesure 20. Par exemple, l'embase 32 peut être proche de la membrane 11 et de la surface d'encrassement 21, tel qu'illustré sur la Figure 8 (a), ou être éloignée de la membrane 11 et de la surface d'encrassement 21, telle que sur la Figure 8 (b). Le positionnement de l'embase 32 permet d'obtenir une cavité 31 dont le volume est plus ou moins grand, en fonction de l'application en question.

## Revendications

1. Système (10) de lutte contre l'encrassement biologique par des microorganismes, adapté pour coopérer avec un dispositif de mesure (20) destiné à être immergé dans un liquide, le dispositif de mesure (20) comprenant une surface d'encrassement (21), le système (10) étant configuré pour recouvrir la surface d'encrassement (21), le système (10) comprenant :

   - une membrane (11) ;
   - un actionneur (12) positionné sur une face de la membrane (11) et apte à mettre en vibration la membrane (11), l'actionneur (12) formant un motif comprenant un contour interne et un contour externe, le contour interne et le contour externe étant concentriques de centre C, le contour interne ayant une distance minimale *di* du centre C et le contour externe ayant une distance minimale *de* du centre C, l'actionneur (12) étant tel que $0{,}2 \leq \frac{d_i}{d_e} \leq 0{,}4$.

2. Système (10) selon la revendication 1, dans lequel le dispositif de mesure (20) comprend un capteur de mesure optique configuré pour émettre un faisceau optique, dans lequel la membrane (11) comprend une surface, dite surface de mesure (11-3), correspondant à une portion de la membrane que traverse le faisceau optique lorsque le système (10) coopère avec le dispositif de mesure (20), dans lequel un centre de la surface de mesure (11-3) correspond au centre C du contour interne et du contour externe du motif formé par l'actionneur (12), et dans lequel une surface intérieure délimitée par le contour interne est au moins égale à 70% de la surface de mesure (11-3).

3. Système (10) selon l'une des revendications précédentes, dans lequel la distance minimale $d_i$ du contour interne au centre C est comprise entre 1 mm et 20 cm.

4. Système (10) selon l'une des revendications précédentes, dans lequel la distance minimale $d_e$ du contour externe au centre C est comprise entre 1,5 mm et 25 cm.

5. Système (10) selon l'une des revendications précédentes, dans lequel l'actionneur (12) est configuré pour mettre en vibration la membrane (11) à une fréquence d'excitation comprise entre 10 Hz et 1 kHz.

6. Système (10) selon l'une des revendications précédentes, dans lequel l'actionneur (12) comprend une pluralité de modules d'actionnement disjoints (12-1, 12-2, 12-3, 12-4).

7. Système (10) selon l'une des revendications précédentes, dans lequel la membrane (11) et le motif formé par l'actionneur (12) sont de même forme.

**8.** Système (10) selon l'une des revendications précédentes, dans lequel l'actionneur (12) est configuré pour mettre en vibration la membrane (11) à une fréquence d'excitation, le système (10) comprenant en outre un circuit électronique configuré pour déterminer une fréquence de vibration de la membrane (10) et pour modifier la fréquence d'excitation en fonction de la fréquence de vibration déterminée.

**9.** Ensemble (30) comprenant un dispositif de mesure (20) et un système (10) de lutte contre l'encrassement biologique selon l'une quelconque des revendications 1 à 8, dans lequel la surface d'encrassement (21) et la membrane (11) sont en vis-à-vis.

**10.** Ensemble (20) selon la revendication 9, dans lequel la membrane (11) a une amplitude maximale de déplacement $u_{max}$ relativement à une position au repos de la membrane (11) selon une direction normale à une surface de la membrane (11), et dans lequel une distance **L** entre la surface d'encrassement (21) et la membrane (11) est telle que $L \geq 2u_{max}$.

**11.** Ensemble (30) selon l'une des revendications 9 ou 10, la membrane (11) ayant deux faces opposées, dites face avant (11-1) et face arrière (11-2), la face avant (11-1) étant destinée à être en contact avec le liquide, l'ensemble (30) comprenant une cavité (31) fermée délimitée au moins en partie par la face arrière (11-2) de la membrane (11) et par la surface d'encrassement (21), dans lequel une variation de pression dans la cavité (31) est uniquement provoquée par le déplacement de la membrane (11) sous l'effet de sa vibration.

**12.** Ensemble selon l'une des revendications 9 à 11, dans lequel la surface d'encrassement est une surface dédiée à une mesure par le dispositif de mesure.

(a)
10
11
12
13
(b)
10
11
12
13

(c)
10
12
12
11
13

**Figure 1**

10
11-1
11-2
13

**Figure 2**

(a)
12
11
$d_e$
$l_a$
$d_i$
C
(b)
12
$l_a$
$d_e$
C
11
$d_i$
(c)
12
11
D
C
11-3
(d)
11
12
D
C
11-3

**Figure 3**

20
21

**Figure 4**

(a)
12-1
11
$d_e$
$l_a$
12-2
$d_i$
C
12-4
12-3

(b)
12-1
11
$d_e$
$l_a$
12-2
C
$d_i$
12-4
12-3

**Figure 5**

30
11
10
L
21
12
20
31
13

**Figure 6**

10
X
$u_{max}$
11
13

**Figure 7**

30
32
11
10
(a)
21
L
12
20
31
13
32

30
32
11
10
(b)
21
L
12
20
32
31
13

**Figure 8**

Europäisches
Patentamt
European
Patent Office
Office européen
des brevets

# RAPPORT DE RECHERCHE EUROPEENNE

Numéro de la demande
EP 25 17 1704

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 3 851 213 A1 (COMMISSARIAT ENERGIE ATOMIQUE [FR]) 21 juillet 2021 (2021-07-21) * alinéa [0082]; figure 2 * | 1-12 | INV. G02B27/00 B08B17/02 |
| A | PONCET P ET AL: "Design and realization of electroactive polymer actuators for transparent and flexible haptic feedback interfaces", 2016 17TH INTERNATIONAL CONFERENCE ON THERMAL, MECHANICAL AND MULTI-PHYSICS SIMULATION AND EXPERIMENTS IN MICROELECTRONICS AND MICROSYSTEMS (EUROSIME), IEEE, 18 avril 2016 (2016-04-18), pages 1-5, XP032897742, DOI: 10.1109/EUROSIME.2016.7463310 * figures 6,7 * | 1-12 | |
| A | EP 2 747 452 A1 (COMMISSARIAT L ENERGIE ATOMIQUE ET AUX ENERGIES ALTERNATIVES [FR]) 25 juin 2014 (2014-06-25) * alinéas [0030], [0048], [0054], [0057], [0058]; figures 1a-1c * | 1-12 | **DOMAINES TECHNIQUES RECHERCHES (IPC)** G02B B08B |
| A | EP 3 162 886 A1 (COMMISSARIAT L ENERGIE ATOMIQUE ET AUX ENERGIES ALTERNATIVES [FR]) 3 mai 2017 (2017-05-03) * alinéa [0045]; figures 3a-3c * | 1-12 | |
| A | EP 0 615 470 A1 (THE TECHNOLOGY PARTNERSHIP PLC [GB]) 21 septembre 1994 (1994-09-21) * page 6, lignes 25-39; figure 1 * | 1-12 | |
| A | US 2023/304970 A1 (CASSET FABRICE [FR] ET AL) 28 septembre 2023 (2023-09-28) * alinéa [0131]; figures 8,9 * | 1-12 | |

Le présent rapport a été établi pour toutes les revendications

1

| Lieu de la recherche | Date d'achèvement de la recherche | Examinateur |
|---|---|---|
| Munich | 23 mai 2025 | Mollenhauer, Ralf |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 25 17 1704

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-05-2025

| Document brevet cité au rapport de recherche | Date de publication | Membre(s) de la famille de brevet(s) | Date de publication |
|---|---|---|---|
| EP 3851213 A1 | 21-07-2021 | EP 3851213 A1 | 21-07-2021 |
| | | FR 3106211 A1 | 16-07-2021 |
| EP 2747452 A1 | 25-06-2014 | EP 2747452 A1 | 25-06-2014 |
| | | FR 3000354 A1 | 27-06-2014 |
| | | US 2014177881 A1 | 26-06-2014 |
| EP 3162886 A1 | 03-05-2017 | EP 3162886 A1 | 03-05-2017 |
| | | FR 3043093 A1 | 05-05-2017 |
| | | US 2017121661 A1 | 04-05-2017 |
| EP 0615470 A1 | 21-09-1994 | AT E131421 T1 | 15-12-1995 |
| | | AU 665222 B2 | 21-12-1995 |
| | | DE 69206824 T2 | 23-05-1996 |
| | | EP 0615470 A1 | 21-09-1994 |
| | | JP 2849647 B2 | 20-01-1999 |
| | | JP H07501481 A | 16-02-1995 |
| | | US 5518179 A | 21-05-1996 |
| | | WO 9310910 A1 | 10-06-1993 |
| US 2023304970 A1 | 28-09-2023 | CN 116018217 A | 25-04-2023 |
| | | EP 4168791 A1 | 26-04-2023 |
| | | FR 3111708 A1 | 24-12-2021 |
| | | US 2023304970 A1 | 28-09-2023 |
| | | WO 2021255396 A1 | 23-12-2021 |

EPO FORM P0460

Pour tout renseignement concernant cette annexe : voir Journal Officiel de l'Office européen des brevets, No.12/82